Europäisches Patentamt

European Patent Office

Office européen des brevets

(11) Veröffentlichungsnummer: **0 400 530**
**A2**

## (12) EUROPÄISCHE PATENTANMELDUNG

(21) Anmeldenummer: **90110068.5**

(22) Anmeldetag: **28.05.90**

(51) Int. Cl.⁵: **B23D 47/04**

(30) Priorität: **31.05.89 DE 3917748**

(43) Veröffentlichungstag der Anmeldung:
**05.12.90 Patentblatt 90/49**

(84) Benannte Vertragsstaaten:
**AT BE CH DE DK ES FR GB GR IT LI LU NL SE**

(71) Anmelder: **POSCH LANDMASCHINENBAU Ges.m.b.H.**
**Paul-Anton-Keller-Strasse**
**A-8430 Leibnitz-Kaindorf(AT)**

(72) Erfinder: **Pretzler, Rudolf**
**Oberaich 12**
**A-8600 Bruck/Mur(AT)**

(74) Vertreter: **Gossel, Hans K., Dipl.-Ing. et al**
**Lorenz, E. Gossel, H. K.,Dipl.-Ing., Philipps, I.,**
**Schäuble, P. B.,Dr., Jackermeier, S.,Dr,**
**Zinnecker, A., Dipl.-Ing., Laufhütte, D,**
**Dipl.-Ing., Ingerle, R. E., Dr.**
**Widenmayerstrasse 23 D-8000 München 22(DE)**

(54) **Vorrichtung zum Ablängen von Schnittgut.**

(57) Die Erfindung betrifft eine Vorrichtung zum Ablängen von Schnittgut mit mindestens einem Sägeblatt. Es soll eine bekannte Holzsäge dieser Art, bei der die abzusägenden Scheiter von Hand eingelegt und stückweise abgesägt werden müssen, derart weitergebildet werden, daß das Ablängen automatisch und mit kurzen Leerlaufzeiten erfolgt, wobei ein einfaches und gefahrloses Beschickungssystem zu schaffen ist. Dies wird dadurch erreicht, daß mindestens ein Zuführelement (12) auf einer Antriebswelle (14) umläuft und daß das im Zuführelement (12) gehaltene Schnittgut (16) auf einer Kreisbahn (15) dem mindestens einem Sägeblatt (18; 20) zugeführt wird.

Fig. 1

## Vorrichtung zum Ablängen von Schnittgut

Die Erfindung betrifft eine Vorrichtung zum Ablängen von Schnittgut, vorzugsweise Holz, mit mindestens einem Sägeblatt.

Bei bekannten Vorrichtungen dieser Art werden die abzusägenden Holzscheiter von Hand in die entsprechende Position zum jeweils stückweisen Ablängen durch das Sägeblatt gebracht. Alternativ dazu können die Scheiter mit einem von Hand betätigten Vorschub jeweils dem Sägeblatt zugestellt werden. Der Nachteil dieser bekannten Vorrichtungen liegt insbesondere in den langen Leerlaufzeiten der Säge. Darüberhinaus ist eine definierte Zuführung des Endstückes unmöglich und für das Bedienungspersonal besteht eine hohe Unfallgefahr.

Der Erfindung liegt daher die Aufgabe zugrunde, eine automatische Ablängvorrichtung mit kurzen Leerlaufzeiten und mit einem einfachen und gefahrlosen Beschickungssystem zu schaffen.

Diese Aufgabe wird durch die kennzeichnenden Merkmale des Anspruchs 1 gelöst. Demnach wird das Schnittgut über ein Zuführelement, welches auf einer Antriebswelle umläuft dem mindestens einen Sägeblatt zugeführt. Hierdurch wird in vorteilhafter Weise eine automatisierte und sehr kompakte Ablängvorrichtung geschaf fen. Durch die Führung des das Schnittgut haltende Zuführelementes auf einer Kreisbahn ist eine kompakte Bauweise der Ablängvorrichtung möglich, wobei die Auflageposition des Schnittguts und die Abwurfposition der geschnittenen Stücke immer am gleichen Ort liegen.

Die Antriebswelle des mindestens einen Zuführelementes verläuft im wesentlichen parallel zu den Antriebswellen der Sägeblätter.

Gemäß einer Ausführungsform liegen die Antriebswellen der Sägeblätter innerhalb einer Kreisbahn, welche die Schwenkbewegung des bzw. der Zuführelemente begrenzt. Das abzulängende Schnittgut wird somit an dem außenliegenden Sägeblatt der rotierenden Kreissägen geschnitten. Falls das bzw. die Zuführelemente zwischen den Sägeblättern angeordnet sind, müssen bei dieser Ausführungsform die Kreissägeblätter fliegend gelagert sein, damit das mindestens eine Zuführelement zwischen den Sägeblättern hindurchgeführt werden kann.

Gemäß einer bevorzugten Ausführungsform liegen die Antriebswellen der Sägeblätter außerhalb der die Schwenkbewegung des Zuführelements begrenzenden Kreisbahn. Der Vorteil dieser Anordnung besteht darin, daß die Sägeblätter grundsätzlich auf einer durchgehenden Welle befestigt sein können.

Die Vorrichtung erfährt eine Ausgestaltung dadurch, daß jeweils paarweise Sägeblätter in Schwenkrichtung des bzw. der Zuführelemente hintereinander angeordnet sind und daß das mindestens eine Zuführelement mittig zwischen den Sägeblattpaaren durchgeführt wird. Hierdurch werden zwei Sägestationen derart gebildet, daß beim Durchschwenken durch die erste Sägestation das zentral gehaltere Schnittgut an beiden Enden abgelängt wird und anschließend beim Durchfahren der zweiten Sägestation zwei weitere nun außenliegende Endteile abgelängt werden. Es bleibt nach Durchfahren der zweiten Sägestation nur noch das gehaltene Stück übrig, das anschließend von dem Zuführelement abgeworfen wird.

Die Abstände der Antriebswellen der Sägeblätter zur Antriebswelle des bzw. der Zuführelemente kann zumindest annähernd gleich sein.

Vorteilhafterweise besteht das Zuführelement im wesentlichen aus einem Schwenkarm und einem relativ zu diesem beweglichen Klemmarm, wobei der Klemmarm je nach Drehwinkelstellung des jeweiligen Schwenkarms in einer Beschickungsposition vor Durchtritt durch die Sägeblätter von einer geöffneten Stellung in eine Klemmstellung überführt und nach Durchtritt durch die Sägeblätter in einer Auswurfposition wieder in eine geöffnete Stellung überführt wird. Dabei kann der Klemmarm schwenkbar auf dem Schwenkarm gelagert sein, wobei seine relative Schwenkbewegung über eine auf einer Kurvenbahn laufende Nockenrolle gesteuert wird. Die Kurvenbahn weist einen konzentrischen und einen exzentrischen Bahnbereich auf, wobei bei Durchlauf der Nockenrolle durch den exzentrischen Bahnbereich der Klemmarm aufgesteuert ist und beim Durchlauf der Nokkenrolle durch den konzentrischen Bahnbereich der Klemmarm zugesteuert ist.

In vorteilhafter Weise sitzt der Klemmarm auf einer im Schwenkarm gelagerten Hohlwelle, in der eine mit der Nockenrolle verbundene Drehwelle gelagert ist, wobei zwischen der Hohlwelle und der Drehwelle eine Torsionsfeder derart angeordnet ist, daß der Klemmarm in zugesteuerter Stellung unter Federlast gegen auf dem Schwenkarm befindliches Schnittgut gedrückt wird. Dadurch steht der Klemmarm unter der vollen Wirkung der Federlast, wenn die Nockenrolle den konzentrischen Kurvenbahnteil durchläuft, bei dem die Nockenrolle ja unwirksam ist, d.h. nicht zu einem Aufsteuern des Klemmarms führt.

Weitere Einzelheiten und Vorteile der Erfindung sind anhand der in der Zeichnung beispielhaft dargestellten Ausführungsbeispiele im folgenden erläutert. Es zeigen:

Fig. 1 eine schematische Seitenansicht einer ersten Ausführungsform einer erfindungsgemäßen Vorrichtung;

Fig. 2 eine Schemadarstellung, die die Anordnung der Sägeblätter in der Ausführungsform gemäß Fig. 1 verdeutlicht;

Fig. 3 eine schematische Seitenansicht einer zweiten Ausführungsform der erfindungsgemäßen Vorrichtung;

Fig. 4 eine vereinfachte schematische Frontansicht der in Fig. 3 dargestellten Vorrichtung;

Fig. 5 eine schematische Seitenansicht einer weiteren Ausführungsform der Erfindung und

Fig. 6 eine Detailansicht, welche die Funktionsweise des Zuführelements gemäß der in Fig. 5 dargestellten Ausführungsform verdeutlicht.

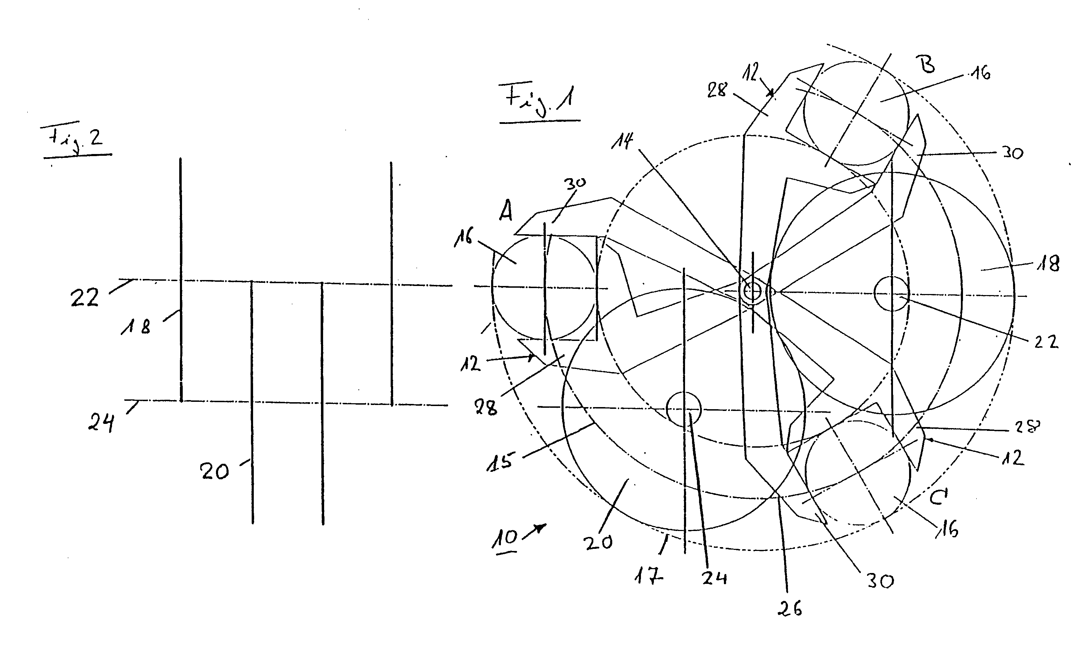

In der in Fig. 1 dargestellten Vorrichtung 10 zum Ablängen von Schnittgut, vorzugsweise Holz, sind zwei Sägestationen mit Kreissägeblättern 18 bzw. 20 angeordnet. Das zu zerteilende Schnittgut 16 wird mittels eines Zuführelements 12, das über eine Antriebswelle 14 geschwenkt wird, an den aus den Sägeblättern 18 bzw. 20 bestehenden Sägestationen vorbeigeführt. Das Zuführelement 12 besteht aus einem Schwenkarm 28, an dessen vorderen Ende das Schnittgut 16 in eine vor den Sägestationen liegenden Aufgabeposition eingelegt wird. Das Schnittgut 16 wird durch einen Klemmarm 30 auf dem Schwenkarm 28 zangenartig fixiert. Die Antriebswellen 22 bzw. 24 der Sägeblätter 18 bzw. 20 sind ungefähr gleich weit von der Antriebswelle 14 des Zuführelements 12 beabstandet. Dabei ist der Abstand zwischen den jeweiligen Wellen so gewählt, daß die Antriebswellen 22 bzw. 24 innerhalb der die Schwenkbewegung des Zuführelements 12 begrenzenden Kreisbahn 17 liegt.

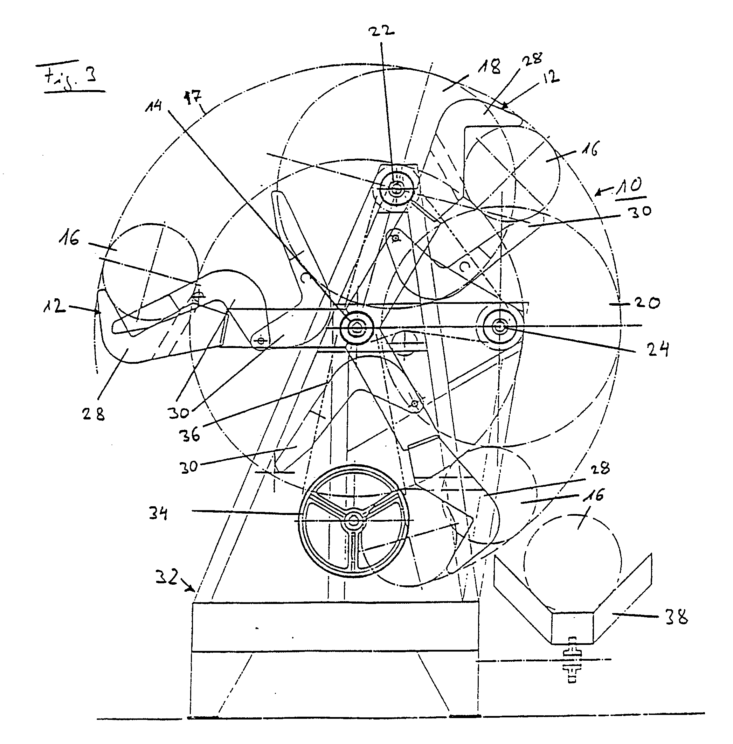

In dieser Ausführungsform ist nur ein Schwenkarm 12 vorgesehen, der gemäß Fig. 1 in drei verschiedenen Positionen gezeigt ist. In der Position A gemäß Fig. 1 ist das abzulängende Schnittgut gerade auf den Schwenkarm 28 aufgelegt worden und der Klemmarm 30 ist gerade zugesteuert worden. In der Position B ist das Zuführelement 12 inzwischen entlang der Kreisbahn 15 weiterverschwenkt worden und befindet sich nun unmittelbar vor der aus den Sägeblättern 18 gebildeten ersten Sägestation. Die Anordnung der Sägeblätter 18 ist schematisch in Fig. 2 dargestellt. Beim Durchfahren des Schwenkarms 12 mitsamt dem eingeklemmten Schnittgut 16 entlang der Sägeblätter 18 werden die außerhalb der Sägeblätter 18 liegenden Enden des Schnittguts 16 abgelängt. In Position C ist das Schnittgut also bereits um die beiden Endstücke verkürzt. Es wird durch Weiterverschwenken des Zuführelements 12 der zweiten aus den Sägeblättern 20 bestehenden Sägestationen zugeführt. Dort werden wiederum die überstehenden Endteile abgelängt, so daß nur noch das zentral gehalterte Schnittgutteil übrig bleibt, das nach Abheben des Klemmarms 30 von dem Schwenkarm 28 entnommen werden kann.

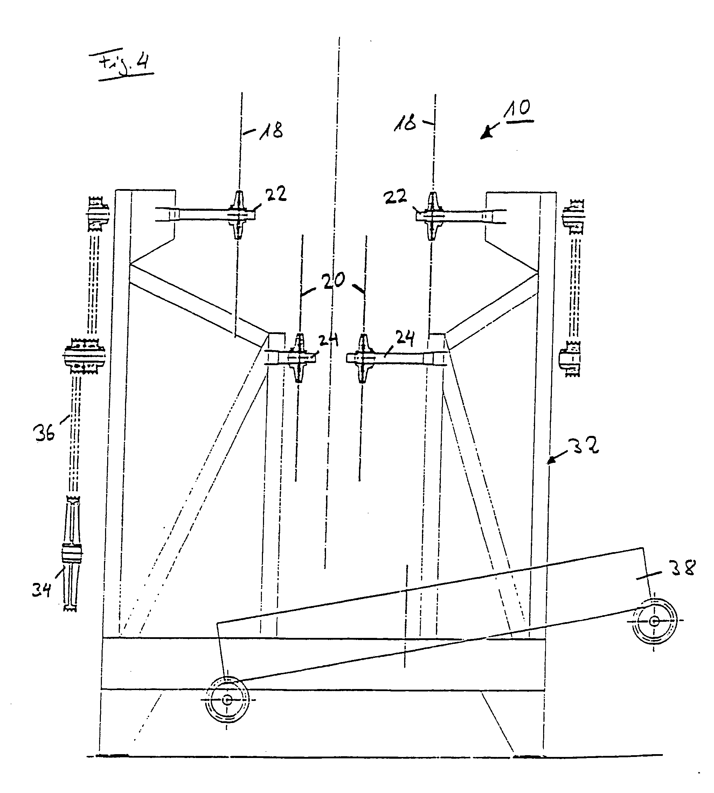

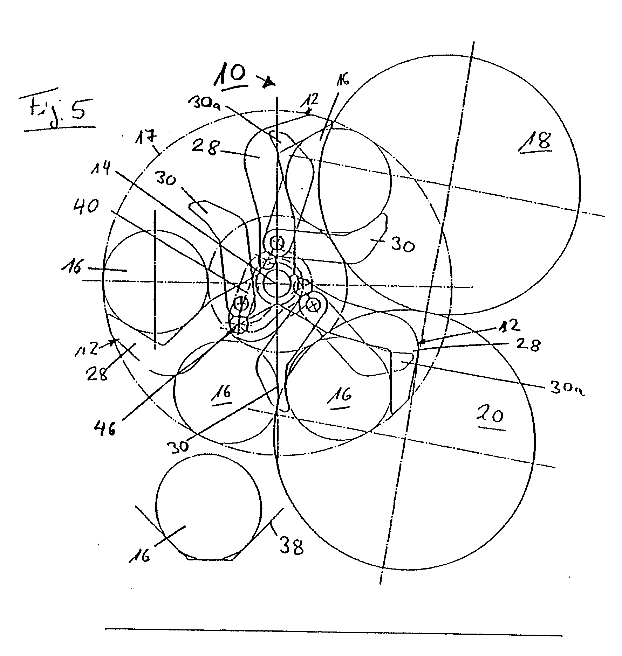

In Fig. 3 ist eine weitere Ausführungsform gezeigt, wobei im einzelnen dargestellt ist, wie diese auf einem Maschinengestell 32 angeordnet ist. Gemäß dieser Ausführungsform weist die Vorrichtung 10 drei Zuführelemente 12 mit je einem Schwenkarm 28 und einem zugehörigen Klemmarm 30 auf. ner Antrieb der einzelnen Wellen erfolgt über umlaufende Keilriemen 36, die über eine Keil riemenscheibe 34, welche mit einem nicht dargestellten Antriebsaggregat verbunden ist, angetrieben wird. Bei dieser Ausführungsform erfolgt ein Aufsteuern des Klemmarms 30 unmittelbar hinter der zweiten Sägestation, welche durch die Sägeblätter 20 gebildet wird, so daß der mittig gehalterte Teil des Schnittguts aufgrund der Schwerkraft vom vorderen Teil des Schwenkarms 28 herunterrutscht. Unmittelbar hinter der Aufgabeposition, auf der das neue Schnittgut aufgelegt wird, steuert der Klemmarm 30 wieder zu. Seitlich ist am Maschinengestell eine Abförderrinne 38 angeordnet, die zum Abtransport der Schnittgutteilstücke 16 dient. Aus Fig. 4 ist die fliegende Lagerung der Sägeblätter 18 bzw. 20 auf den Antriebswellen 22 bzw. 24 ersichtlich. Diese fliegende Lagerung im Maschinengestell 32 ist erforderlich, da es sich auch bei der Ausführungsform gemäß Fig. 3 um eine Ablängvorrichtung mit Außenschnitt handelt, bei der also das Schnittgut entlang des Außenumfangs der Kreissägeblätter 18 bzw. 20 geschnitten wird. Die zentral angeordneten Zuführelemente 12 müssen bei dieser Anordnung zwischen den Sägeblättern durchgeführt werden.

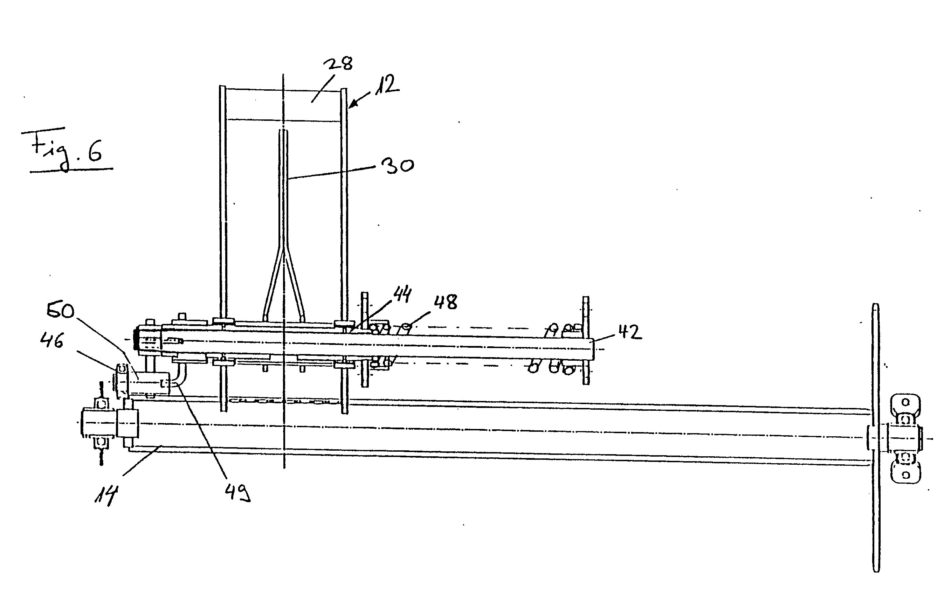

Eine derartige Durchführung erübrigt sich bei der Ausführungsform gemäß Fig. 5. Dort ist eine Vorrichtung mit Innenschnitt dargestellt, d.h. das Schnittgut 16 wird innen an den Kreissägeblättern zersägt. Da nun die Antriebsachsen 22 bzw. 24 der Sägeblätter 18 bzw. 20 außerhalb der die Schwenkbewegung der Zuführelemente 12 umhüllenden Kreislinie 17 angeordnet sind, können diese durchlaufen, d.h. einstückig sein. Auch bei der Ausführungsform gemäß Fig. 5 sind drei Zuführelemente 12 sternförmig angeordnet, die jeweils aus einem Schwenkarm 28 und einen Klemmarm 30 bestehen Dabei ist jeweils ein Klemmarm 30 schwenkbar auf dem Schwenkarm 28 gelagert und seine relative Schwenkbewegung wird über eine auf einer Kurvenbahn 40 laufende Nockenrolle 46 gesteuert. Durchläuft die Nockenrolle den exzentrischen Teil der Kurvenbahn 40, ist der Klemmarm 30 aufgesteuert, durchläuft sie den konzentrischen Teil der Kurvenbahn 40, so wird der Klemm arm 30a gegen den Schwenkarm 28 bewegt.

Wenn der Klemmarm 30a gegen den Schwenkarm 28 bewegt wird, steht dieser unter einer Federspannung, so daß Schnittgut verschiedenen Durchmessers von den Zuführelementen 12 zangenartig erfaßt wird. Anhand Fig. 6 wird verdeutlicht, wie die Federvorspannung des Klemmarms 30a während des Durchlaufens der Nockenrolle 46 durch die Kurvenbahn 40 erreicht wird. Hierzu wird der Klemmarm 30 mit einer im Schwenkarm 28 gelagerten Hohlwelle 44 verbunden. In dieser ist eine über den Hebel 50 mit der Nockenrolle 46 verbundene Drehwelle 42 gelagert und zwischen der Hohlwelle 44 und der Drehwelle 42 ist eine Torsionsfeder 48 derart angeordnet, daß ein mit der Hohlwelle 44 verbundener Anschlag 49 gegen den mit der Drehwelle 42 verbundenen Hebel 50 vorgespannt ist. Damit wird erreicht, daß das Zuführelement 12 nur dann Klemmkräfte zwischen dem Schwenkarm 28 und dem Klemmarm 30 aufbringt, wenn Schnittgut eingelegt wird, weil nur dann der Anschlag 49 vom Hebel 50 abgehoben wird und damit die Federspannung durch den Klemmarm 30 erhöht wird. Aufgrund der hohen Vorspannung der Torsionsfeder 48 werden die Spannkräfte bei steigendem Schnittgutdurchmesser nur unwesentlich größer. In Fig. 5 ist zum einen je ein Klemmarm 30a dargestellt, der unmittelbar an dem Schwenkarm 28 anliegt, da kein Schnittgut zwischen beiden Armen angeordnet wurde. Alternativ dazu ist eingezeichnet, wie Schnittgut 16 zwischen dem Klemmarm 30 und dem Schwenkarm 28 unter der Federspannung der Torsionsfeder 48 eingeklemmt ist. Nach Durchfahren der beiden Sägestationen steuert die inzwischen in dem exzentrischen Teil der Kurvenbahn 40 angelangte Nockenrolle 46 den Klemmarm 30 auf, so daß das noch gehaltene Schnittgutstück herausfallen kann. Der Klemmarm 30 bleibt bis nach Durchlauf der Auflageposition geöffnet.

Gemäß der zuvor erläuterten Ausführungsformen waren die Zuführelemente 12 immer mittig zwischen den Sägeblättern angeordnet.

Dies ist allerdings nicht zwingend. So können selbstverständlich die Zuführelemente auch seitlich neben den Sägeblättern angeordnet werden. Auch die Zahl und Anordnung der Sägestationen kann beliebig gewählt werden.

Mit der zuvor erläuterten Vorrichtung können Holzstämme, welche beispielsweise in einer Länge von einem Meter aufgelegt werden, mit einer Länge von 20 cm, 25 cm, 33 cm, 50 cm oder anderer geeigneter Länge geschnitten werden.

**Ansprüche**

1. Vorrichtung zum Ablängen von Schnittgut, vorzugsweise Holz, mit mindestens einem Sägeblatt,
**dadurch gekennzeichnet,**
daß mindestens ein Zuführelement (12) auf einer Antriebswelle (14) umläuft und daß das im Zuführelement (12) gehaltene Schnittgut (16) auf einer Kreisbahn (15) dem mindestens einem Sägeblatt (18; 20) zugeführt wird.

2. Vorrichtung nach Anspruch 1, dadurch gekennzeichnet, daß die Antriebswelle (14) des Zuführelementes im wesentlichen parallel zu der mindestens einen Antriebswelle (22; 24) des mindestens einen Sägeblattes (18; 20) verläuft.

3. Vorrichtung nach Anspruch 1 oder 2, dadurch gekennzeichnet, daß mindestens eine Antriebswelle (22; 24) des mindestens einen Sägeblatts (18; 20) innerhalb der die Schwenkbewegung des Zuführelements (12) begrenzenden Kreisbahn (17) liegt.

4. Vorrichtung nach Anspruch 1 oder 2, dadurch gekennzeichnet, daß die mindestens eine Antriebswelle (22; 24) des mindestens einen Sägeblattes (18; 20) außerhalb der die Schwenkbewegung des Zuführelementes (12) begrenzenden Kreisbahn (17) liegt.

5. Vorrichtung nach einem der Ansprüche 1-4, dadurch gekennzeichnet, daß jeweils paarweise Sägeblätter (18; 20) in Schwenkrichtung des Zuführelements (12) hintereinander angeordnet sind und daß das Zuführelement (12) mittig zwischen den Sägeblattpaaren durchgeführt wird.

6. Vorrichtung nach Anspruch 5, dadurch gekennzeichnet, daß die Abstände der Antriebswellen (22; 24) der Sägeblätter (18; 20) zur Antriebswelle (14) des Zuführelements (12) zumindest annähernd gleich sind.

7. Vorrichtung nach einem der Ansprüche 1-6, dadurch gekennzeichnet, daß das Zuführelement (12) im wesentlichen aus einem Schwenkarm (28) und einem relativ zu diesem beweglichen Klemmarm (30) besteht.

8. Vorrichtung nach Anspruch 7, dadurch gekennzeichnet, daß der Klemmarm (30) je nach Drehwinkelstellung des Schwenkarms (28) vor Durchtritt durch die Sägeblätter (18; 20) von einer geöffneten Stellung in eine Klemmstellung überführt und nach Durchtritt durch die Sägeblätter (18; 20) wieder in eine geöffnete Stellung überführt wird.

9. Vorrichtung nach Anspruch 7 oder 9, dadurch gekennzeichnet, daß der Klemmarm (30) schwenkbar auf dem Schwenkarm (28) gelagert ist und daß seine relative Schwenkbewegung über eine auf einer Kurvenbahn (40) laufenden Nockenrolle (46) gesteuert wird.

10. Vorrichtung nach einem der Ansprüche 7-9, dadurch gekennzeichnet, daß der Klemmarm (30) auf einer im Schwenkarm (28) gelagerten Hohlwelle (44) sitzt, in der eine über einen Hebel (50) mit der Nockenwelle (46) verbundene Drehwelle (42) gelagert ist und daß zwischen der Hohlwelle (44) und der Drehwelle (42) eine Torsionsfeder (48) derart angeordnet ist, daß ein mit der Hohlwelle (44) verbundener Anschlag (49) gegen den mit der Drehwelle (42) verbundenen Hebel (50) vorgespannt ist.

Fig. 1

Fig. 2

Fig. 3

Fig. 4

Fig. 5

EP 0 400 530 A2

Fig. 6